# EUROPÄISCHE PATENTANMELDUNG

(11) **EP 1 721 814 A2**
(43) Veröffentlichungstag der Anmeldung: **15.11.2006**
(21) Anmeldenummer: 06009738.3
(22) Anmeldetag: 11.05.2006
(51) Int. Cl.: B62D 63/06

(54) **Einachsenfahrgestell oder Tandemfahrgestell für den Transport von Wechselaufbauten**

(30) Priorität: 11.05.2005 DE 202005007723 U
(71) Anmelder: Gahrns, Bernhard, 29413 Bornsen (DE)
(72) Erfinder: Gahrns, Bernhard, 29413 Bornsen (DE)
(74) Vertreter: Einsel, Martin

(57) **Zusammenfassung**

Ein Einachsenfahrgestell oder ein Tandemachsenfahrgestell dient für den Transport von Wechselaufbauten oder dergleichen. Es beisitzt einen Rahmen (20) zur lösbaren Halterung der Wechselaufbauten. Der Rahmen (20) weist zwei Längsholme (21), (22) auf, die durch einen vorderen Querträger (23) miteinander verbunden sind. Unter jedem Längsholmen (21), (22) ist je ein Einzelrad oder ein Tandemrad mit zwei zueinander benachbarten Rädern mit parallelen Achsen federnd gelagert. Eine Spannvorrichtung (40) ist vorgesehen, durch die der Abstand eines Längsholmes (21), (22) von seinem zugeordneten Einzelrad oder Tandemrad (11), (12) gegen die Federwirkung verringerbar ist.

## Beschreibung

Die Erfindung betrifft ein Einachsenfahrgestell oder ein Tandemfahrgestell für den Transport von Wechselaufbauten oder dergleichen mit einem Rahmen zur lösbaren Halterung der Wechselaufbauten.

Derartige Einachsenfahrgestelle werden im Regelfall an kleineren Lastkraftwagen oder Lieferwagen oder im Regelfall größeren Personenkraftwagen angehängt, um kleinere bis mittlere Lasten zu befördern. Dies sind beispielsweise Gulaschkanonen, Trinkwasseranlagen zur Versorgung in unzugänglichen Gebieten, mittlere Lasten für den Einsatz an Baustellen oder aber beispielsweise auch Behälter für den Transport etwa von Brieftauben oder Hunden und Katzen zu Zucht- und Ausstellungszwecken.

Bei etwas schwereren Belastungen finden auch sogenannte Tandemfahrgestelle Verwendung. Diese sind ähnlich aufgebaut wie Einachsenfahrgestelle, besitzen jedoch paarweise je 2 nebeneinander angeordnete Räder auf jeder Seite. Diese beiden Räder sind in etwa in Längsrichtung in der Nähe der Mitte des Fahrgestelles angeordnet und vermögen eine höhere Last aufzunehmen.

Interessant sind derartige Einachsenfahrgestelle oder Tandemfahrgestelle für den Transport von Wechselaufbauten gerade auch in Katastrophengebieten, wo sie benötigt werden, um beispielsweise nach einem Erdbeben möglichst rasch mit der begrenzten Zahl an Fahrzeugen und Anhängem möglichst viele Waren über vergleichsweise ungünstige Straßenverhältnisse an entsprechende Orte zu transportieren.

Einachsenfahrgestelle oder auch Tandemfahrgestelle haben dabei deutliche Vorteile gerade auf ungünstigem Gelände, da sie weniger anspruchsvoll hinsichtlich des Straßenuntergrundes sind als herkömmliche Anhänger. Sie besitzen einen Rahmen, auf dem Wechselaufbauten, etwa kleinere Container, Behälter für Tiere. Trinkwasserbehälter oder Behälter mit Werkzeug oder Lebensmittelrationen demontierbar befestigt werden können. Am Zielort muss dann nicht der Anhänger wie bei gängigen Kraftfahrzeuganhängem entladen werden, sondern es wird der komplette Wechselaufbau beziehungsweise der komplette Container von dem Einachsenfahrgestell demontiert. Es kann dann ein anderer Wechselaufbau, beispielsweise ein inzwischen geleerter Container, wieder montiert und der Anhänger sofort weiter genutzt werden.

Daraus ergibt sich, dass es insbesondere auf einen einfachen und rasch durchzuführenden Wechsel der Wechselaufbauten ankommt.

Aufgabe der vorliegenden Erfindung ist es, einen Vorschlag für ein Einachsenfahrgestell oder ein Tandemfahrgestell vorzulegen, bei dem ein besonders rascher Wechsel der Wechselaufbauten möglich ist.

Diese Aufgabe wird bei einem gattungsgemäßen Einachsenfahrgestell dadurch gelöst, dass der Rahmen zwei Längsholme aufweist, die durch einen vorderen Querträger miteinander verbunden sind, dass unter jedem Längsholm je ein Rad federnd gelagert ist, und dass eine Spannvorrichtung vorgesehen ist, durch die der Abstand eines Längsholmes von seinem zugeordneten Rad gegen die Federwirkung verringerbar ist.

Bei einem gattungsgemäßen Tandemfahrgestell wird diese Aufgabe dadurch gelöst, dass der Rahmen zwei Längsholme aufweist, die durch einen vorderen Querträger miteinander verbunden sind, dass unter jedem Längsholm je ein Tandemrad mit zwei zueinander benachbarten Rädern mit parallelen Achsen federnd gelagert ist, und dass eine Spannvorrichtung vorgesehen ist, durch die der Abstand eines Längsholmes von seinem zugeordneten Tandemrad gegen die Federwirkung verringerbar ist.

Mit diesem Gedanken wird überraschend die Aufgabe gelöst. Das Anordnen der zwei parallelen Längsholme, die durch einen vorderen Querträger miteinander verbunden sind, lässt einen relativ großen Freiraum zwischen den beiden Längsholmen. Das bedeutet, dass es möglich ist, das Einachsenfahrgestell rückwärts so zu rangieren, dass die beiden Längsholme links und rechts von einem Gestell platzierbar sind, auf dem sich ein Wechselaufbau befindet.

Um nun den Wechselaufbau auf der Oberseite der Längsholme zu platzieren, wird erfindungsgemäß der Längsholm durch die Spannvorrichtung nach unten in Richtung des ihm zugeordneten Rades gezogen. Dies geschieht bevorzugt auf beiden Seiten des Fahrgestells gleichzeitig, also werden beide Längsholme durch die Spannvorrichtung nach unten in Richtung der ihnen jeweils zugeordneten Räder gezogen. Das Einachsen- beziehungsweise Tandemachsenfahrgestell wird dadurch flacher beziehungsweise niedriger und ragt weniger weit nach oben. Es kann unter den Wechselaufbau gefahren werden. Befindet es sich dort, kann die Spannvorrichtung diese Absenkung wieder freigeben, so dass die Längsholme genau unter die passenden, angestrebten Bereiche des Wechselaufbaus gelegt werden. Dort kann dann der Wechselaufbau entsprechend befestigt werden.

Danach kann dann das Einachsen- oder Tandemfahrgestell mit samt den darauf aufgebauten Wechselaufbauten wieder normal weiter verfahren werden. Bei einem erneuten Wechsel an dieser Stelle oder beispielsweise auch an einem ganz anderen Ort wird umgekehrt vorgegangen. Der Anhänger, also das Einachsen- oder Tandemfahrgestell mit dem darauf befindlichen Wechselaufbauten, wird wieder über eine Stellanordnung gefahren, die sich dann in dem Freiraum zwischen den beiden Längsholmen befindet. In dieser Position wird dann durch die Spannvorrichtung wieder dafür gesorgt, dass der Abstand der Längsholme zu den ihm zugeordneten Rädern verringert wird. Dadurch reduziert sich die Höhe der Wechselaufbauten, die auf einem vorgesehenen Gestell abgelegt werden können. Ohne die Last wird dann das Fahrgestell wieder herausgefahren. Nach dem Herausfahren unter dem abgelegten Wechselaufbau kann dann die Spannvorrichtung wieder gelöst werden, so dass sich die Längsholme wieder nach oben begeben.

Übrigens kann in ähnlicher Form auch der Wechsel der Räder vereinfacht werden, indem die Spannvorrichtung in diesem Falle bei festgehaltenem Längsholm das Rad nach oben vom Erdboden wegzieht.

Besonders bevorzugt ist es, wenn an der Vorderseite des Rahmens eine Deichsel vorgesehen ist, ganz besonders dann, wenn die Deichsel aus zwei symmetrischen Deichselhälften zusammengesetzt ist. Dies ermöglicht eine vereinfachte Anbringung an einem Zugfahrzeug.

Die Funktionsweise der Spannvorrichtung kann dadurch besonders zuverlässig und sinnvoll ausgerüstet werden, dass an der der Vorderseite des Rahmens zugewandten Unterseite eines jeden Längsholms je ein Längslenker vorgesehen ist, dass der Längslenker einen Hebel aufweist, der um ein erstes Lager drehbar gelagert ist, und dass der Hebel an dem dem ersten Lager abgewandten Ende ein zweites Lager für das dem Längsholm auf dieser Seite zugeordnete Rad beziehungsweise Tandemrad aufweist.

Ganz besonders dann, wenn man die Längslenker mit Hebeln in Form von runden Rohren, Mehrkantrohren, insbesondere von Vierkantrohren oder von Flacheisen ausstattet, die nur um eine waagerechte Achse schwenkbar sind, werden die seitlichen Auslenkungen stark reduziert und die Stabilität der Gesamtkonzeption wesentlich verbessert. Insbesondere Vierkantrohre aus Stahl haben sich als sehr stabil und für diesen Zweck geeignet herausgestellt.

Die Fahreigenschaften des gesamten Einachsen- oder Tandemfahrgestells können verbessert werden, wenn zwischen dem dem ersten Lager abgewandten Ende des Hebels und dem Längsholm eine oder mehrere Federn, Stoßdämpfer oder dergleichen vorgesehen sind. Als Feder ist insbesondere eine Schraubenfeder vorgesehen, gegen die die Spannvorrichtung wirkt und die daher zweckmäßig im Wesentlichen senkrecht angeordnet ist.

Von Vorteil ist es außerdem, wenn zwischen dem Längsholm und dem Hebel ein die seitliche Bewegung des Hebels minderndes Fangband angeordnet ist.

Mechanisch besonders einfach und trotzdem den Anforderungen genügend kann die Spannvorrichtung ein am Längsholm gelagertes, mittels einer Spindel verstellbares Drahtseil aufweisen, welches für die Verstellung des Abstandes von Längsholm und Rad beziehungsweise Tandemrad vorgesehen ist, wenn zudem eine der Spindel abgewandte Öse oder dergleichen mit dem freien Ende des drehbaren Hebels oder dem Bereich des zweiten Lagers oder der Achse verbindbar ist.

Durch Betätigen der Spindel kann damit der Rahmen mit den Längs- und Querholmen zu den Längslenkern herabgezogen werden. Während der Fahrt, hinsichtlich der Spannvorrichtung also im Ruhezustand, kann die Öse in den an den Längsholmen befindlichen Haken eingehängt und das Drahtseil angezogen werden.

Zweckmäßig ist es ferner, wenn Achsstümpfe für die Lagerung der Räder an dem Hebel eingeschweißt sind. Für die Lagerung der Längslenker am Rahmen mit den Längs- und Querholmen finden bevorzugt wartungsfreie Lager Verwendung.

Zum Festhalten der Wechselaufbauten hat es sich als zweckmäßig herausgestellt, auf den Längsholmen vier Auflagen jeweils mit Exzenterspannem zu versehen.

Als Stoßdämpfer werden bevorzugt Teleskopstoßdämpfer verwendet

Bei Testfahrgestellen hat sich herausgestellt, dass mit der Erfindung sehr praktikable Einachsen- und Tandemfahrgestelle machbar sind. Ein Prototyp besitzt eine Leermasse von gebremst 200 kg und kann eine Nutzlast von 1400 kg aufnehmen. Ein anderer Prototyp besitzt ungebremst eine Leermasse von 120 kg und kann eine Nutzlast von 630 kg aufnehmen.

Die erfindungsgemäßen Einachsenfahrgestelle oder auch Tandemfahrgestelle sind insbesondere auch gut dafür geeignet, Behälter mit Kleintieren, wie beispielsweise Brieftauben, zwischen verschiedenen Ausstellungs- oder Einsatzorten zu transportieren. Der Transport kann für Kleintiere, insbesondere für Brieftauben, besonders dann schonend und angenehm durchgeführt werden, wenn entsprechend Stoßdämpfer, wie in bevorzugten Ausführungsformen, vorgesehen sind, ferner Gummifedern und Schraubenfedern, wie in weiteren bevorzugten Ausführungsformen.

Die erfindungsgemäßen Fahrgestelle können dann, wenn sie zum Transport der Kleintiere nicht benötigt werden, auch zu ganz anderen Zwecken eingesetzt werden. Dies hat den Vorteil, dass nicht für einen bestimmten Einsatzzweck ein Spezialfahrzeug beziehungsweise Spezialanhänger vorgesehen werden muss, sondern dass dieser einer Vielfachnutzung zugeführt werden kann. Außerdem kann während einer Ausstellung der Anhänger zum wechselweisen Transport von einer größeren Anzahl von Behältern mit entsprechenden Kleintieren zwischen verschiedenen Einsatzstellen genutzt werden, ohne dass Zeit verloren geht oder mühsame Umbauarbeiten erforderlich werden. Dabei spielt insbesondere die rasche Montage- und Demontagemöglichkeit der Wechselaufbauten eine sehr vorteilhafte Rolle.

Im Folgenden wird anhand der Zeichnungen ein Ausführungsbeispiel der Erfindung näher beschrieben. Es zeigen:
- **Figur 1**: eine Ansicht eines erfindungsgemäßen Einachsenfahrgestells von der Seite;
- **Figur 2**: eine Draufsicht auf das Einachsenfahrgestell aus Figur 1; und
- **Figur 3**: eine vergrößerte Darstellung aus der Figur 1 betreffend den Bereich des Rades.

Ein Einachsenfahrgestell dient zum Transport von Wechselaufbauten wie beispielsweise Containern oder anderen Behältern, etwa für den Transport von Trinkwasser, Nahrungsmitteln, Werkzeug, Kleintieren für Ausstellungszwecke oder beispielsweise auch für Gulaschkanonen.

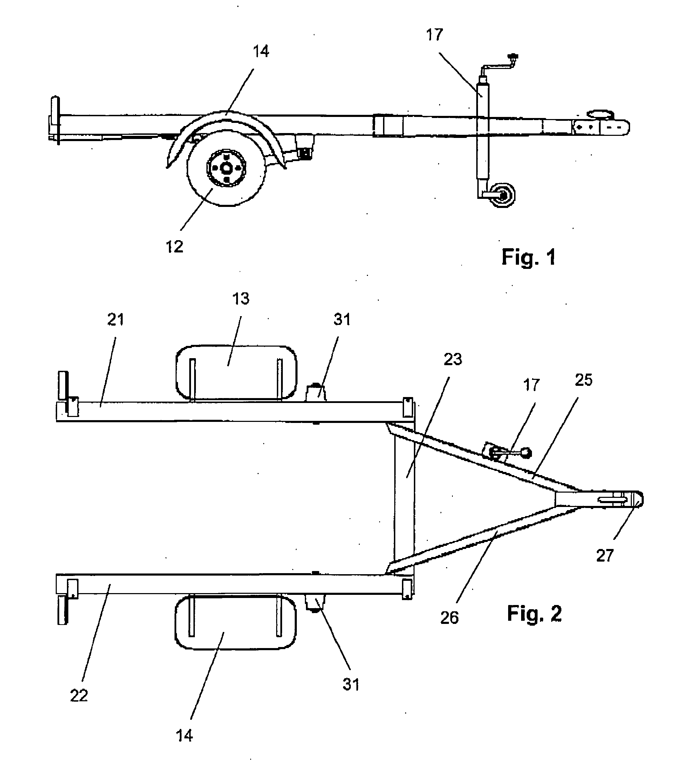

Das in **Figur 1** von der Seite zu sehende Einachsenfahrgestell weist eine Achse 10 und zwei Räder 11 und 12 auf. Die Achse 10 ist nicht durchgehend, jedoch sind die Achsen der beiden Räder 11 und 12 in einer Linie, so dass sich beide Räder 11, 12 gleichmäßig und gleichzeitig drehen, sofern keine Rangier- und Kurvenfahrten vorgenommen werden. Da in der Figur 1 das Einachsenfahrgestell nur von der Seite zu sehen ist, kann hier nur jeweils das auf der rechten Seite angeordnete Rad 12 gesehen werden; das auf der linken Seite angeordnete Rad 11 Ist verdeckt. Ähnlich ist es mit einigen weiteren Elementen.

Die Räder 11 und 12 sind nach oben jeweils durch Schutzbleche 13 beziehungsweise 14 abgedeckt, die insbesondere vermeiden, dass die Wechselaufbauten auf dem Fahrgestell durch Schmutz von den Rädern 11 und 12 zusätzlich belastet werden.

Figur 1 wäre die normale Fahrtrichtung des Einachsenfahrgestells nach rechts. In Fahrtrichtung vor den Rädern 11 und 12 ist eine höhenverstellbare Stütze 17 angedeutet, damit bei Nichtbenutzung eine Dreipunktlagerung des Einachsfahrgestells möglich wird.

Insbesondere in der **Figur 2** mit ihrer Draufsicht kann man gut den Aufbau eines Rahmens 20 erkennen. Der Rahmen 20 besitzt zwei parallel zueinander angeordnete Längsträger oder Längsholme 21 und 22, die durch einen Querträger oder Querholm 23 miteinander verbunden sind. Die beiden Längsholme 21, 22 verlaufen senkrecht zum Querholm 23, alle drei Holme befinden sich jedoch in einer Ebene.

Auf den Längsholmen 21, 22 werden die Wechselaufbauten später abgestützt, die in den Figuren jeweils weggelassen sind.

An dem Querholm 23 greift eine Deichsel aus zwei symmetrischen Deichselhälften 25 und 26 an. Die Deichsel ist mittels eines Anhängemechanismus' 27 an einem Zugfahrzeug (nicht dargestellt) befestigbar. Der Anhängemechanismus 27 kann eine Kugelkupplung und/oder einen Auflaufkopf aufweisen. An der linken Deichselhälfte 25 ist die oben bereits erwähnte höhenverstellbare Stütze 17 befestigt.

An je einem Längsholm 21, 22 ist außen ein Rad 11, 12 mit in der Figur 2 gut erkennbarem Schutzblech 13, 14 angeordnet.

In der Figur 2 erkennt man gut den Freiraum zwischen den beiden Längsholmen 21. 22, der von der rückwärtigen, dem Querholm oder Querträger 23 abgewandten Seite aus eine gute.Zugänglichkeit des Bereiches zwischen den Längsholmen und den Rädern ermöglicht.

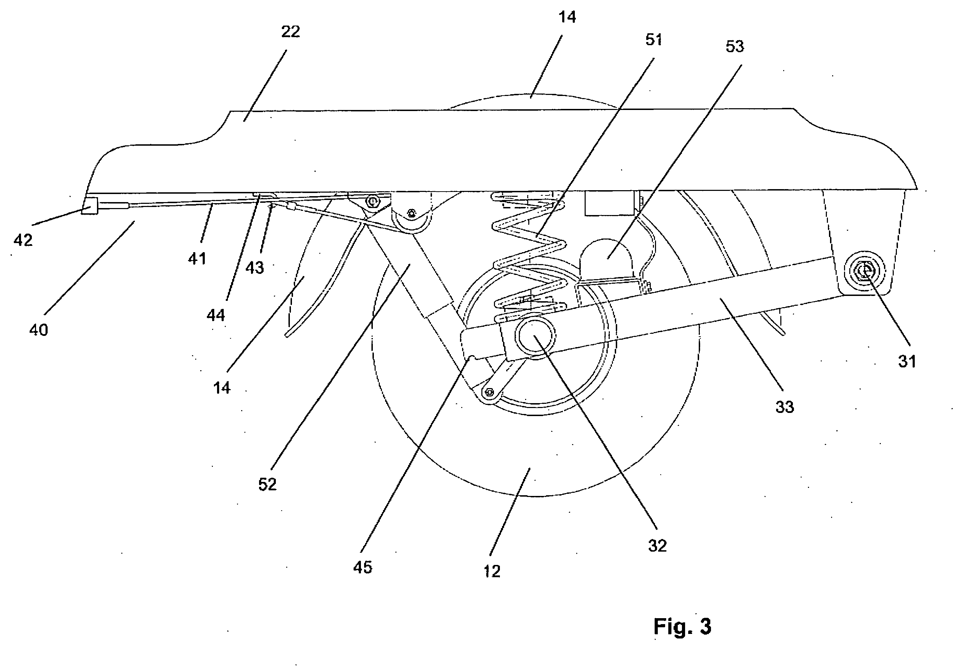

Wie man in der Figur 3 gut erkennen kann, sind unter jedem der beiden Längsholme 21, 22 Längslenker angeordnet. In der Figur 3 sieht man lediglich den auf den Betrachter zugewandten rechten Längslenker 30; der auf der linken Seite unter dem linken Längsholm 21 angeordnete andere Längslenker ist aber symmetrisch entsprechend aufgebaut.

Der Längslenker 30 besitzt insbesondere einen zwischen einem ersten Lager 31 und einem zweiten Lager 32 angeordneten Hebel 33. Das erste Lager 31 ist an dem Längsholm 22 angeordnet und ermöglicht es, dass der Hebel 33 um das erste Lager 31 gedreht werden kann, und zwar in einer Ebene, die durch den Längsholm 22 und eine vertikale Fläche aufgespannt wird.

Der Hebel 33 selbst ist ein Vierkantrohr oder ein Flacheisen, dass sich in der gleichen Ebene beziehungsweise einer Parallelebene dazu befindet.

Das zweite Lager 32 ist mit der Achse 10 des rechten Rades 12 verbunden. Der Hebel 33 des rechten Längslenkers verbindet mithin die Achse 10 des Rades 12 um die Achse des Lagers 31 drehbar mit dem Längsholm 22. Das bedeutet, dass die Achse 10 des Rades 12 in einem gewissen Rahmen im Wesentlichen senkrecht aufwärts und abwärts bewegt werden kann.

Darüber hinaus ist eine Spannvorrichtung 40 mit einem Drahtseil 41 vorgesehen. Dieses Drahtseil 41 ist mittels einer Spindel 42 mit Mutter verstellbar. Am anderen Ende des Drahtseils 41 befindet sich eine Öse 43.

Das Drahtseil 41 der Spannvorrichtung 40 kann einerseits wie in der Figur 3 dargestellt in einen Haken 44 auf der Unterseite des Längsholmes 22 eingehakt werden. Das Drahtseil 41 wird dann mittels der Spindel 42 festgezogen. Dies ist die Ruheposition, in der die Spannvorrichtung 40 keine Funktion ausübt. Diese Ruheposition wird zum Beispiel während der Fahrt des Einachsenfahrgestells eingenommen, in der eine vollständige Entlastung vorgenommen ist, sich das Einachsenfahrgestell also in seiner vollständig nach oben ausgefahrenen Position befindet. Das Einhaken des Drahtseils 41 in den Haken 44 dient vor allem dazu, dass das Drahtseil 41 nicht unbeabsichtigt in die Federn oder Achselemente eingreift.

Bei einer zweiten Position der Spannvorrichtung 40 wird die Öse 43 an dem der Spindel 42 gegenüberliegenden Ende des Drahtseils 41 nicht in den Haken 44, sondern in einen anderen Haken 45 eingehakt, der in der Figur 3 am freien Ende des Hebels 33 zu erkennen ist.

Wird in dieser Position die Spindel 42 verstellt und damit das Drahtseil 41 verkürzt, so wird das freie Ende des Hebels 33 in Richtung der Unterseite des Längsholms 22 gezogen. Da der Hebel 33 an diesem Punkt auch das Lager 32 mit der Achse 10 des Rades 12 trägt, wird das gesamte Rad 12 also in Richtung des Längsholmes 22 gezogen. Der Abstand der Achse 10 des Rades 12 von dem Längsholm 22 verringert sich also. Ruht das Rad 12 auf dem Boden, wird auf diese Weise also der Längsholm 22 nach unten gezogen. Stellt man sich jetzt auf dem Längsholm 22 einen dort mittels einer Exzenterspanneinrichtung festgehaltenen Wechselaufbau vor, so würde dieser mit nach unten gezogen. Läge dieser Wechselaufbau jedoch ortsfest auf einer Auflage und wäre die Exzenterspanneinrichtung gelöst, würde sich auf diese Weise der Längsholm 22 vom Wechselaufbau trennen.

Nach dieser Trennung könnte dann das komplette Einachsenfahrgestell ohne die Wechselaufbauten unter diesen herausgefahren werden. Der große Freiraum zwischen den beiden Längsholmen 21 und 22, der zwar nicht in der Figur 3, dafür aber in der Figur 2 zu erkennen ist, ermöglicht einen weiträumigen Aufbau von entsprechenden Stellvorrichtungen, auf denen sich die Wechselaufbauten dann abstützen können.

Die Spannvorrichtung 40 mit dem Drahtseil 41 arbeitet sinnvoll gegen eine entsprechende Gegenkraft. Diese kann durch Federelemente 50 aufgebracht werden. Die Bewegung der Achse 10 des Rades 12 senkrecht aufwärts und senkrecht abwärts wird durch diese Federn entsprechend gedämpft.

Diese Bewegung wird über eine Schraubenfeder 51 und einen Stoßdämpfer 52 wie eine Gummifeder 53 gedämpft und abgefedert und somit werden während der Fahrt des Einachsenfahrgestells mit oder ohne Wechselaufbauten die Stoßbelastungen auf die Wechselaufbauten reduziert.

Schraubenfeder 51, Gummizusatzfeder 52 und ein in der Darstellung als Teleskopstoßdämpfer ausgebildeter Stoßdämpfer 52 sind auf jeder Seite, also für jedes der beiden Räder 11 und 12 vorgesehen. Ein zwischen dem Rahmen mit den Längsholmen 21 und 22 sowie dem Längslenker 30 angeordnetes Fangband verhindert ein zu weites Ausschwingen des Längslenkers 30.

### Bezugszeichenliste

- 10: Achse
- 11: linkes Rad
- 12: rechtes Rad
- 13: Schutzblech des linken Rades
- 14: Schutzblech des rechten Rades
- 17: höhenverstellbare Stütze

- 20: Rahmen
- 21: linker Längsträger beziehungsweise Längsholm
- 22: rechter Längsträger oder Längsholm
- 23: vorderer Querholm
- 25: linke Deichselhälfte
- 26: rechte Deichselhälfte
- 27: Anhängevorrichtung

- 30: Längslenker
- 31: erstes Lager des Längslenkers
- 32: zweites Lager des Längslenkers
- 33: Hebel des Längslenkers

- 40: Spannvorrichtung
- 41: Drahtseil
- 42: Spindel
- 43: Öse
- 44: Haken am Längsholm 22
- 45: weiterer Haken am freien Ende des Hebels 33

- 50: Federung
- 51: Schraubenfeder
- 52: Stoßdämpfer
- 53: Gummifeder

## Patentansprüche

1. Einachsenfahrgestell für den Transport von Wechselaufbauten oder dergleichen mit einem Rahmen (20) zur lösbaren Halterung der Wechselaufbauten.
**dadurch gekennzeichnet,**
**dass** der Rahmen (20) zwei Längsholme (21, 22) aufweist, die durch einen vorderen Querträger (23) miteinander verbunden sind,
**dass** unter jedem Längsholm (21, 22) je ein Rad (11. 12) fedemd gelagert ist, und
**dass** eine Spannvorrichtung (40) vorgesehen ist, durch die der Abstand eines Längsholmes (21, 22) von seinem zugeordneten Rad (11, 12) gegen die Federwirkung verringerbar ist.

2. Tandemachsenfahrgestell für den Transport von Wechselaufbauten oder dergleichen mit einem Rahmen (20) zur lösbaren Halterung der Wechselaufbauten,
**dadurch gekennzeichnet,**
**dass** der Rahmen (20) zwei Längsholme (21, 22) aufweist, die durch einen vorderen Querträger (23) miteinander verbunden sind,
**dass** unter jedem Längsholm (21, 22) je ein Tandemrad mit zwei zueinander benachbarten Rädern mit parallelen Achsen fedemd gelagert ist, und
**dass** eine Spannvorrichtung (40) vorgesehen ist, durch die der Abstand
eines Längsholmes (21, 22) von seinem zugeordneten Tandemrad (11, 12) gegen die Federwirkung verringerbar ist.

3. Einachsenfahrgestell nach Anspruch 1 oder Tandemachsenfahrgestell nach Anspruch 2,
**dadurch gekennzeichnet,**
**dass** an der Vorderseite des Rahmens (20) eine Deichsel (25, 26) vorgesehen ist.

4. Einachsenfahrgestell oder Tandemachsenfahrgestell nach Anspruch 3,
**dadurch gekennzeichnet,**
**dass** die Deichsel (25, 26) aus zwei symmetrischen Deichselhälften (25, 26) zusammengesetzt lst.

5. Einachsenfahrgestell oder Tandemachsenfahrgestell nach einem der vorstehenden Ansprüche,
**dadurch gekennzeichnet,**
**dass** an der der Vorderseite des Rahmens (20) zugewandten Unterseite eines jeden Längsholms (21, 22) je ein Längslenker (30) vorgesehen ist,
**dass** der Längslenker (30) einen Hebel (33) aufweist, der um ein erstes Lager (31) drehbar gelagert ist, und
**dass** der Hebel (33) an dem dem ersten Lager (31) abgewandten Ende ein zweites Lager (32) für das dem Längsholm ( 21,22) auf dieser Seite zugeordnete Rad (11,12) beziehungsweise Tandemrad aufweist.

6. Einachsenfahrgestell oder Tandemachsenfahrgestell nach Anspruch 5,
**dadurch gekennzeichnet,**
**dass** der Hebel (33) ein Mehrkantrohr, insbesondere ein Vierkantrohr oder ein Flacheisen oder ein Rohr mit rundem, speziell kreisförmigen Querschnitt ist, welches im ersten Lager (31) um eine waagerechte Achse schwenkbar ist und
**dass** das erste Lager (31) so ausgebildet ist, dass seitliche Auslenkungen des Hebels (33) reduziert sind.

7. Einachsenfahrgestell oder Tandemachsenfahrgestell nach Anspruch 5 oder 6,
**dadurch gekennzeichnet**
**dass** für die Lagerung des Rades (11,12) oder der Räder am Hebel (33) ein beziehungsweise mehrere Achsstümpfe eingeschweißt sind.

8. Einachsenfahrgestell oder Tandemachsenfahrgestell nach einem der Ansprüche 5 bis 7,
**dadurch gekennzeichnet,**
**dass** zwischen dem dem ersten Lager (31) abgewandten Ende des Hebels (33) und dem Längsholm (21, 22) ein oder mehrere Federn (51, 53), Stoßdämpfer (52) oder dergleichen vorgesehen sind.

9. Einachsenfahrgestell oder Tandemachsenfahrgestell nach Anspruch 8,
**dadurch gekennzeichnet,**
**dass** die Feder eine Schraubenfeder (51) ist, die im Wesentlichen senkrecht angeordnet ist.

10. Einachsenfahrgestell oder Tandemachsenfahrgestell nach Anspruch 8 oder 9,
**dadurch gekennzeichnet,**
**dass** zusätzlich zur Feder (51, 53) ein schräg zum hinteren Ende des Längsholms (21, 22) angeordneter Stoßdämpfer (52) vorgesehen ist.

11. Einachsenfahrgestell oder Tandemachsenfahrgestell nach Anspruch 10,
**dadurch gekennzeichnet,**
**dass** der Stoßdämpfer (52) und das Lager (32) des Rades (11, 12) beziehungsweise Tandemrades über einen zwischenhebel (54) verbunden sind.

12. Einachsenfahrgesteti oder Tandemachsenfahrgestell nach einem der Ansprüche 9 bis 11,
**dadurch gekennzeichnet,**
**dass** zusätzlich zur Schraubenfeder (51) eine Gummifeder (53) vorgesehen ist.

13. Einachsenfahrgestell oder Tandemachsenfahrgestell nach einem der vorstehenden Ansprüche,
**dadurch gekennzeichnet,**
**dass** zwischen dem Längsholm (21, 22) und dem Hebel (33) ein die seitliche Bewegung des Hebels (33) mindemdes Fangband angeordnet ist.

14. Einachsenfahrgestell oder Tandemachsenfahrgestell nach einem der vorstehenden Ansprüche,
**dadurch gekennzeichnet,**
**dass** die Spannvorrichtung (40) ein am Längsholm (21, 22) gelagertes, mittels einer Spindel (42) verstellbares Drahtseil (41) aufweist, weiches für die Verstellung des Abstandes von Längsholm (21, 22) und Rad (11, 12) beziehungsweise Tandemrad vorgesehen ist, und
**dass** eine der Spindel (42) abgewandte Öse (43) oder dergleichen mit dem freien Ende des drehbaren Hebels (33) oder dem Bereich des zweiten Lagers (32) oder der Achse (10) verbindbar ist.

15. Einachsenfahrgestell oder Tandemachsenfahrgestell nach Anspruch 14,
**dadurch gekennzeichnet,**
**dass** für die Halterung des Drahtseils (41) bei Nichtgebrauch am Längsholm (21, 22) ein die Öse (43) aufnehmender Haken (44) vorgesehen ist.

16. Einachsenfahrgestell oder Tandemachsenfahrgestell nach Anspruch 14 oder 15,
**dadurch gekennzeichnet, dass** für die Verbindung der Öse (43) mit dem freien Ende des Hebels (33) dieses freie Ende hakenförmig ausgebildet ist.

17. Einachsenfahrgestell oder Tandemachsenfahrgestell nach Anspruch 14 oder 15,
**dadurch gekennzeichnet,**
**dass** für die Verbindung der Öse (43) mit dem Bereich des zweiten Lagers (32) ein Bereich des untersten Endes des Stoßdämpfers (52) einen Haken aufweist.
